# EUROPÄISCHE PATENTSCHRIFT

(11) **EP 2 064 087 B1**
(45) Veröffentlichungstag und Bekanntmachung des Hinweises auf die Patenterteilung: **01.10.2014**
(21) Anmeldenummer: 07801225.9
(22) Anmeldetag: 07.08.2007
(51) Int. Cl.: B60L 13/08, B60L 13/03

(54) **MAGNETSCHWEBEFAHRZEUG MIT FÜHRMAGNETEN**
MAGLEV VEHICLE HAVING GUIDANCE MAGNETS
VÉHICULE À SUSTENTATION MAGNÉTIQUE POURVU D'AIMANTS DE GUIDAGE

(30) Priorität: 05.09.2006 DE 102006042138
(43) Veröffentlichungstag der Anmeldung: 03.06.2009
(73) Patentinhaber: ThyssenKrupp Transrapid GmbH, 34127 Kassel (DE)
(72) Erfinder: HAHN, Wolfgang, 34125 Kassel (DE); PFANNKUCH, Harald, 34590 Wabern (DE)
(74) Vertreter: Lorenz, Bernd Ingo Thaddeus
(86) Internationale Anmeldenummer: PCT/DE2007/001422
(87) Internationale Veröffentlichungsnummer: WO 2008/028450

(56) Entgegenhaltungen:
- WO-A-2005/090117
- DE-A1- 4 139 471
- JP-A- 55 044 726

## Beschreibung

Die Erfindung betrifft ein Magnetschwebefahrzeug der im Oberbegriff des Anspruchs 1 angegebenen Gattung.

Magnetschwebefahrzeuge dieser Art sind bekannt (z. B. DE 10 2004 056 438 A1). Die Führmagnete dienen dem Zweck, die Magnetschwebefahrzeuge insbesondere bei Kurvenfahrten und bei seitlichen Laststörungen (z. B. durch Wind) in der Spur zu halten, und werden dazu mit Hilfe von Regelkreisen und diesen zugeordneten Spaltsensoren so gesteuert, dass ein nachfolgend als Führspalt bezeichneter Spalt zwischen ihren Magnetpölschenkeln und einer Seitenführschiene stets auf einem vorgewählten Wert von z. B. 10 mm gehalten wird. Bei bekannten Führmagnetsystemen sind dazu pro Fahrzeug oder Fahrzeugsektion in Fahrzeuglängsrichtung jeweils zwei Gruppen von je drei hintereinander angeordneten Führmagneten und je eine zwischen den beiden Gruppen liegende Bremseinrichtung vorgesehen. Jeder Führmagnet wird durch eine Magnetanordnung gebildet, die einen in Fahrzeuglängsrichtung erstreckten Kern mit zwei Wicklungsebenen aufweist, in denen jeweils mehrere Wicklungen und diesen zugeordnete Spaltsensoren hintereinander angeordnet sind. Dabei sind die Wicklungen und Spaltsensoren in jedem Führmagneten jeweils paarweise derart in Reihenschaltung verbunden und an die Regelkreise angeschlossen, dass sich weitgehende Redundanz ergibt. Das bedeutet, dass an denjenigen Enden eines Führmagneten, die an eine führmagnetfreie Zone, d. h. z. B. an eine von der Bremseinrichtung gebildete Lücke oder an das Vorder- oder Hinterende des Fahrzeugs grenzen, zwei dort übereinander liegende Wicklungen durch unterschiedliche Regelkreise bedient werden. Gleichzeitig wird an denjenigen Enden der Führmagnete, die an einen anderen Führmagneten angrenzen, ein redundantes Verhalten dadurch erzielt, dass beim Ausfall der dort befindlichen Wicklungen oder Regelkreise die Führfunktion vom benachbarten Führmagneten mit übernommen wird, indem dessen angrenzende Wicklungen mit einem entsprechend höheren Strom beaufschlagt werden.

Die aus derartigen Führmagneten zusammengesetzten Führmagnetsysteme sind durchweg symmetrisch aufgebaut. Das bedeutet einerseits, dass sie unabhängig davon, ob sie in eine Bugsektion, eine Mittelsektion oder eine Hecksektion eingebaut werden, in gleicher Weise ausgebildet sind. Andererseits besteht die Symmetrie aber auch darin, dass die Führmagnete auf beiden Seiten einer quer zur Fahrtrichtung verlaufenden Mittelebene der Sektionen spiegelsymmetrisch ausgebildet und angeordnet sind, wobei ein mittlerer Bereich jeder Sektion meistens eine von Führmagneten freie und mit einer Bremseinrichtung versehene Zone ist. Die einzige Abweichung von einer exakten Spiegelsymmetrie kann darin bestehen, dass Übergangsbereiche zwischen zwei Fahrzeugsektionen ebenfalls mit Führmagneten versehen und daher die an diese angrenzenden, in den beteiligten Sektionen angeordneten Führmagnete mit einer geringeren Anzahl von Wicklungen versehen werden, als es beim Fehlen der in den Übergangsbereichen vorhandenen Führmagnete der Fall wäre.

Die Führmagnetsysteme von Magnetschwebefahrzeugen der beschriebenen Art sind in der Regel überdimensioniert. Wegen der beschriebenen symmetrischen Bauweise werden die zu erzielenden Magnet- bzw. Führkräfte anhand der größten beim Betrieb auftretenden Lasten berechnet. Dadurch ergibt sich zwar der Vorteil, dass das gesamte Magnetschwebefahrzeug mit wenigen unterschiedlichen Führmagnettypen ausgerüstet werden kann. Es muss jedoch in Kauf genommen werden, dass an manchen Stellen längs des Fahrzeugs eine zu große Reserve an Magnetkraft zur Verfügung steht und daher aufgrund der entsprechend groß dimensionierten Eisenkerne mehr Gewicht als nötig installiert wird. Soll das vermieden werden, können an bestimmten Stellen so große Belastungen auftreten, dass die Kraft der Führmagnete hier nicht ausreicht, was mit einer Beeinträchtigung des Fahrkomforts verbunden wäre.

Ausgehend davon liegt der Erfindung das technische Problem zugrunde, das Magnetschwebefahrzeug der eingangs bezeichneten Gattung so mit Führmagneten auszurüsten, dass einerseits besser als bisher den beim Betrieb auftretenden Belastungen Rechnung getragen wird, andererseits kein überflüssiges Gewicht installiert zu werden braucht.

Zur Lösung dieses Problems dienen die kennzeichnenden Merkmale der Ansprüche 1 und 2.

Durch die Erfindung wird erstmals ein Führmagnetsystem geschaffen, das zwar einerseits "ortsorientiert" ist, d. h. in Längsrichtung des Magnetschwebefahrzeugs überall die erforderlichen Kraftreserven besitzt, andererseits aber dennoch hinsichtlich des Gewichts, der Spulen- bzw. Wicklungszahl und der Redundanz weitgehend optimiert werden kann.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 schematisch eine Seitenansicht eines Teils einer Bugsektion eines Magnetschwebefahrzeugs;
Fig. 2 in einer schematischen Darstellung den Aufbau eines Führmagnetsystems der Bugsektion nach Fig. 1;
Fig. 3 schematisch die Zuordnung von Wicklungen der Führmagnete zu Regelkreisen bei der Bugsektion nach Fig. 1;
Fig. 4 und 5 den Fig. 1 und 3 entsprechende Ansichten, jedoch bezogen auf einen Übergangsbereich zwischen einer Bugsektion nach Fig. 1 und einer Mittelsektion des Magnetschwebefahrzeugs;
Fig. 6 bis 9 schematisch verschiedene Ausführungsbeispiele von Führmagneten, die in einem erfindungsgemäßen Magnetschwebefahrzeug angewendet werden; und
Fig. 10 in einer schematischen Seitenansicht ein Magnetschwebefahrzeug mit je einer Bug, Mittel- und Hecksektion und den darin verwendeten Führmagneten.

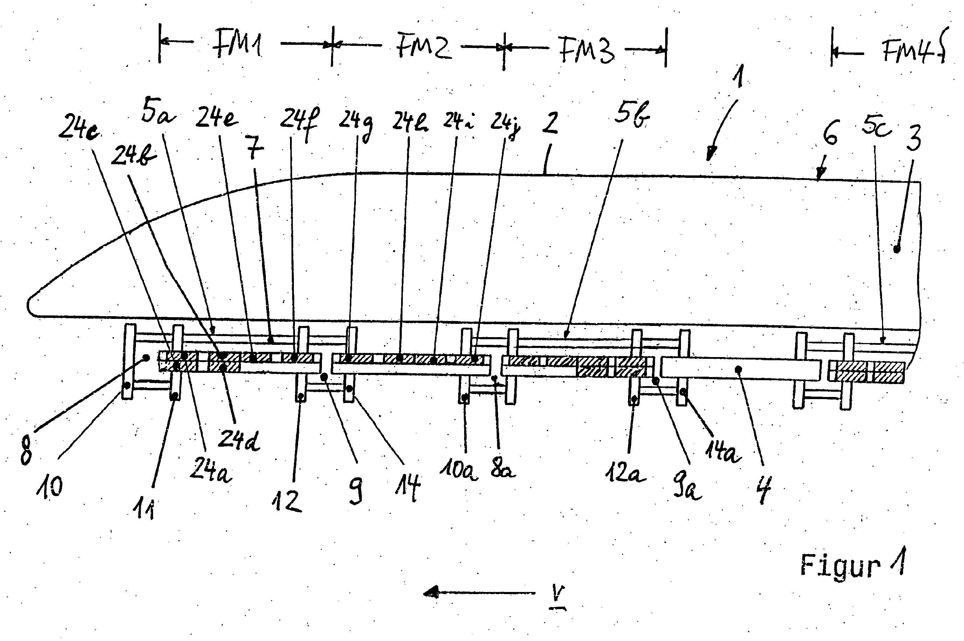

Fig. 1 zeigt schematisch einen Vorderabschnitt einer Bugsektion 1 eines Magnetschwebefahrzeugs in einer Seitenansicht. Die übliche Fahrtrichtung des Bugabschnitts 1 ist durch einen Pfeil v angedeutet. Außerdem ist mit dem Bezugszeichen 2 ein in Fahrtrichtung v vorn liegender Bereich und mit dem Bezugszeichen 3 ein in Fahrtrichtung v dahinter liegender, hinterer Bereich der Bugsektion 1 bezeichnet. Die beiden Bereiche 2 und 3 sind in Regel durch die Lage einer Bremseinrichtung 4 in Form einer Wirbelstrombremse od. dgl. definiert, die hinter einer vorgewählten Anzahl von hier drei Führmagneten FM1, FM2 und FM3 in der Bugsektion 1 an- geordnet ist.

Weiter sind in Fig. 1 grob schematisch einige Schwebegestellabschnitte 5a, 5b und 5c eines Schwebegestells gezeigt, die in Längsrichtung des Bugsektors 1 hintereinander angeordnet und über nicht dargestellte Luftfedern an einen Wagenkasten 6 des Bugsektors 1 angekoppelt sind. Die Schwebegestellabschnitte 5a, 5b und 5c weisen in Längsrichtung beabstandete, durch Längsträger 7 verbundene Abstützelemente 8, 9 in Form von Rahmenteilen auf, die mit je einem vorderen und hinteren Abstützteil 10, 11 bzw. 12, 14 versehen sind. Dabei ist im Ausführungsbeispiel der in Fahrtrichtung vorderste Führmagnet FM1 so mit dem Schwebegestellabschnitt 5a verbunden, dass sein Vorderende mit dem hinteren Abstützteil 11 des vorderen Abstützelements 8 und sein Hinterende mit dem vorderen Abstützteil 12 des hinteren Abstützelements 9 verbunden ist, wie Fig. 1 deutlich zeigt. Der nächste Führmagnet FM2 ist an seinem Vorderende mit dem hinteren Abstützteil 14 des hinteren Abstützelements 9 des Schwebegestellabschnitts 5a und an seinem Hinterende mit einem vorderen Abstützteil 10a eines vorderen Abstützelements 8a des in Fahrtrichtung nachfolgenden Schwebegestellabschnitts 5b jeweils gelenkig verbunden. Der dritte Führmagnet FM3 ist analog zum ersten Führmagnet FM1 mit dem Schwebegestellabschnitt 5b verbunden. Die beschriebene Anordnung kann längs des gesamten Bugsektors 1 fortgesetzt werden. Vorzugsweise ist jedoch nach dem dritten Führmagneten FM3 längs eines Abschnitts, der der Länge eines Führmagneten entspricht, die Bremseinrichtung 4 eingebaut, die eine von Führmagneten freie Zone bildet und mit dem vor- und nachlaufenden Schwebegestellabschnitt 5b und 5c jeweils gelenkig verbunden ist. An dieser Stelle fehlt somit die Ankopplung eines weiteren Führmagneten am hinteren Abstützteil 14a des Abstützelements 9a in derselben Weise, wie im Bugbereich das vordere Abstützteil 10 des vorderen Abstützelements 8 nicht an einen Führmagneten gekoppelt ist, da vor dem Führmagneten FM1 - in Fahrtrichtung betrachtet - ebenfalls eine führmagnetfreie Zone liegt. Auf der in Fig. 1 rechten, d. h. in Fahrtrichtung v hinter der Bremseinrichtung 4 liegenden Seite in die Anordnung entsprechend, beginnend mit einem Führmagneten FM4. Außerdem ist klar, dass in Fig. 1 nur ein in Fahrtrichtung vorn liegender Bereich 2 des Bugsektors 1 dargestellt ist und in dem in Fig. 1 nur teilweise sichtbaren, hinteren Bereich 3 entsprechende Führmagnete und ggf. weitere Bremseinrichtungen 4 vorhanden sein können. Im Ausführungsbeispiel ist jedoch angenommen, dass in Fahrtrichtung v hinter der Bremseinrichtung 4 ebenfalls drei Führmagnete angeordnet sind und danach eine Mittelsektion oder eine Hecksektion folgt, die mit der Bugsektion 1 durch eine übliche Kupplung verbunden ist.

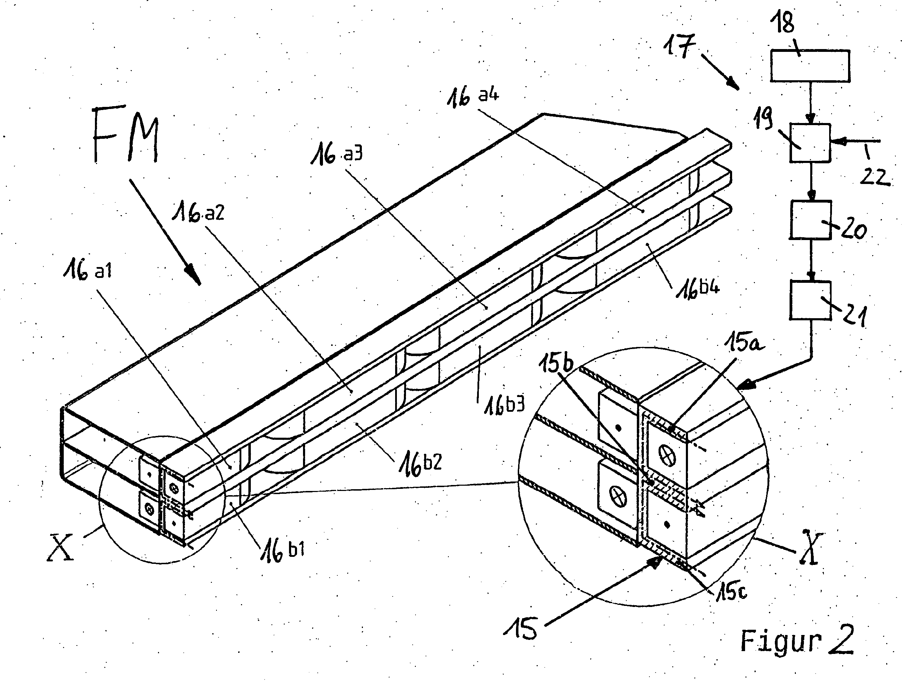

In dem in Fig. 1 von den Führmagneten FM1 bis FM3 eingenommenen Räumen kön- nen - in Fahrtrichtung v betrachtet - jeweils vier hintereinander angeordnete Magnetpole bzw. Magnetpolschenkel untergebracht werden, die aus Kernen und zugehörigen Wicklungen bestehen. Fig. 2 zeigt dies beispielhaft für einen Kern 15 eines Führmagneten FM. Der Kern 15 hat drei Schenkel 15a, 15b und 15c, deren freie Stirnflächen in einer Ebene liegen und zusammen mit einer nicht dargestellten, am Fahrweg des Magnetschwebefahrzeugs angebrachten Seitenführschiene einen ebenfalls nicht dargestellten Führspalts zwischen dieser und dem Führmagneten FM bilden. Die die Schenkel 15a bis 15c verbindenden Stegteile des Kerns 15 sind in zwei übereinander angeordneten Wicklungsebenen mit in Fahrt- bzw. Längsrichtung v hintereinander liegenden Wicklungen 16a1 bis 16a4 und 16b1 bis 16b4 umwickelt, so dass der Führmagnet FM maximal acht Wicklungen 16 aufweisen kann. Die Wicklungen 16 werden durch Regelkreise 17 so gesteuert, dass die Größe des Führspalts während der Fahrt des Magnetschwebefahrzeugs im wesentlichen konstant bleibt. Zu diesem Zweck enthält der in Fig. 2 für die Wicklung 16b1 schematisch angedeutete Regelkreis 17 wenigstens einen Spaltsensor 18, einen an diesen angeschlossenen Vergleicher 19, einen mit diesem verbundenen Regler 20 und ein mit dem Regler 20 und der Wicklung 16b1 verbundenes Stellglied 21, z. B. einen Stromsteller. Der Spaltsensor 18 liefert ein dem aktuellen Istwert des Führspalts entsprechendes Signal, das im Vergleicher 19 mit einem über eine Leitung 22 zugeführten Sollsignal für den Führspalt verglichen wird. Der Regler 20 errechnet aus der Differenz zwischen den Ist- und Sollsignalen jeweils ein dem Stellglied 21 zugeführtes Stellsignal. Das Stellglied 21 steuert schließlich den Strom durch die Wicklung 16b1 so, dass der von ihr beeinflusste Teil des Führspalts stets im wesentlichen dem Sollwert entspricht.

Wie Fig. 1 zeigt, müssen innerhalb des für jeden Führmagneten vorgesehenen, ein vorgewähltes Rastermaß definierenden Raums nicht immer die maximal acht möglichen Magnetpole untergebracht sein. Vielmehr weisen im Ausführungsbeispiel alle Führmagnete FM1 bis FM3 weniger als acht Magnetpole bzw. Wicklungen auf, die jeweils durch schraffierte Kästchen angedeutet sind, wobei jedes Kästchen einen Magnetpolschenkel und die zugehörige Wicklung darstellen soll. Insbesondere enthält der Führmagnet FM1 in seiner vorderen Hälfte vier, auf zwei Ebenen verteilte Wicklungen 24a, 24b, 24c und 24d, in seiner hinteren Hälfte dagegen nur zwei Wicklungen 24e und 24f, die in einer Ebene hintereinander angeordnet sind. Der Führmagnet FM2 enthält in einer einzigen Ebene, die vorzugsweise der Ebene der Wicklungen 24e und 24f entspricht, vier hintereinander angeordnete Wicklungen 24g, 24h, 24i und 24j. Der Führmagnet FM3 ist spiegelsymmetrisch zum Führmagneten FM1 ausgebildet und wie dieser mit sechs Wicklungen versehen. Die nach der Bremseinrichtung 4 folgenden Führmagnete FM4 usw. sind wie die Führmagnete FM1 bis FM3, jedoch spiegelsymmetrisch zu diesen ausgebildet.

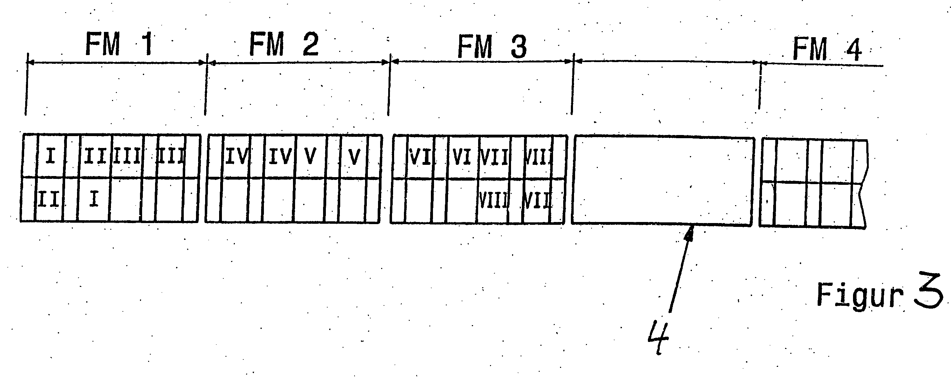

Zur Einsparung von Regelkreisen 17 (Fig. 2) sind die Wicklungen 24 jeweils paarweise in Reihenschaltung zusammengefasst und an einen zugeordneten Regelkreis 17 an- geschlossen. Das ist schematisch in Fig. 3 dargestellt, in der die in Fig. 1 gezeigten Wicklungen 24a bis 24j usw. vereinfacht durch einzelne, mit römischen Zahlen belegte Felder dargestellt sind. Felder mit identischen Zahlen geben an, dass die betreffenden Wicklungen in Reihe geschaltet und demselben Regelkreis 17 zugeordnet sind. Aus einem Vergleich der Fig. 1 und 3 ergibt sich beispielsweise, dass die Wicklungen 24a und 24d einem Regelkreis I, die Wicklungen 24b und 24c einem Regelkreis II und die Wicklungen 24e, 24f einem Regelkreis III zugeordnet sind.

Aus der beschriebenen Anordnung folgt, dass dort, wo die Führmagnete an die führmagnetfreien Zonen grenzen, jeweils zwei Paare von Wicklungen (z. B. 24a, 24b und 24c, 24d) hintereinander angeordnet sind, während dazwischen jeweils nur einzelne Wicklungen 24e bis 24j usw. vorhanden sind. Der Hauptgrund für diese Anordnung ist die erforderliche Redundanz. In mittleren Bereichen der Bugsektion 1 kann z. B. ein am Ende eines Führmagneten befindliches Wicklungspaar (z. B. 24e, 24f) durch den zugehörigen Regelkreis III mit einem erhöhten Strom versorgt werden, wenn ein Wicklungspaar (z. B. 24g, 24h) eines benachbarten Führmagneten oder der diesem zugeordnete Regelkreis (z. B. IV) ausfällt. Der eine Führmagnet kann dadurch den Ausfall des defekten Führmagneten zumindest zeitweise kompensieren. Diese Möglichkeit besteht dort, wo die Führmagnete FM1 oder FM3 an eine führmagnetfreie Zone grenzen, nicht. Daher ist die Anordnung dort so getroffen, dass sie in sich redundant ist. Das bedeutet, dass in diesem Fall z. B. die diagonal übereinander liegenden Wicklungen 24b, 24c vom Regelkreis II mit erhöhtem Strom versorgt werden, wenn das Wicklungspaar aus den ebenfalls diagonal übereinander liegenden Wicklungen 24a und 24d oder zugehörige Regelkreis I ausfallen sollte.

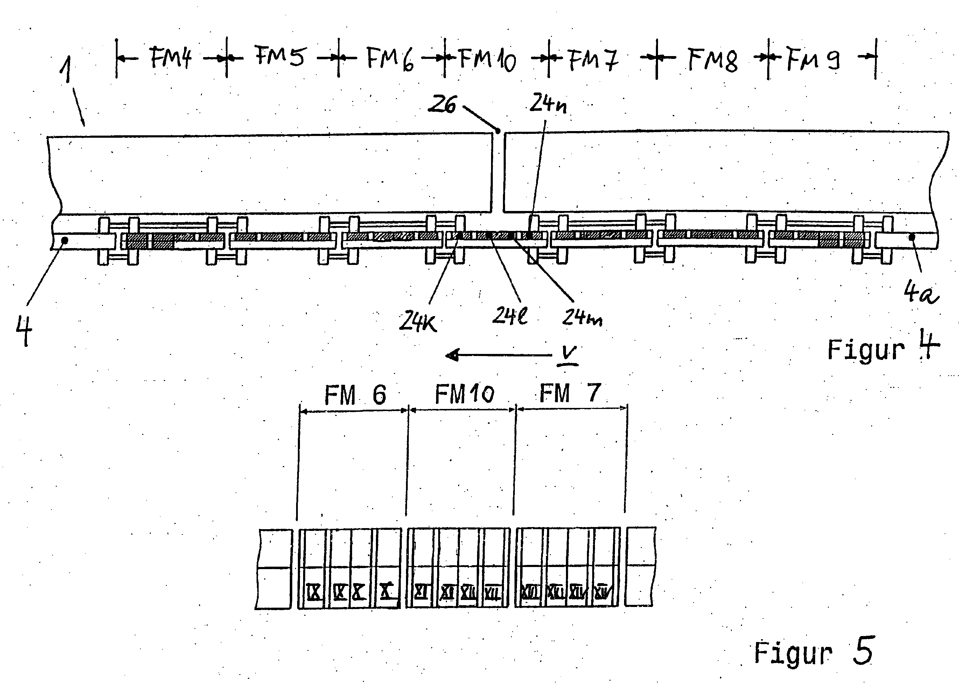

Im hinteren Bereich des Bugsektors 1 sind entsprechende Führmagnete FM4, FM5 und FM6 vorgesehen, wie in Fig. 4 schematisch angedeutet ist. Insbesondere könnte an dem in Fig. 1 rechten Ende der Bugsektion 1 ein dem Führmagneten FM3 entsprechende Führmagnet FM6 vorhanden sein. Das ist insbesondere dann zweckmäßig, wenn der Bugsektor 1 auch allein verwendet werden soll. Wird er dagegen stets mit einer angekoppelten Mittel- oder Hecksektion verwendet, dann bietet sich die Anordnung nach Fig. 4 und 5 an, in denen schematisch die Verhältnisse an einem in Fahrtrichtung v hinteren Ende der Bugsektion 1 und einem vorderen Ende einer mit dieser gekoppelten Mittelsektion 1a dargestellt sind, die u. a. Führmagnete FM7, FM8 und FM9 aufweist.

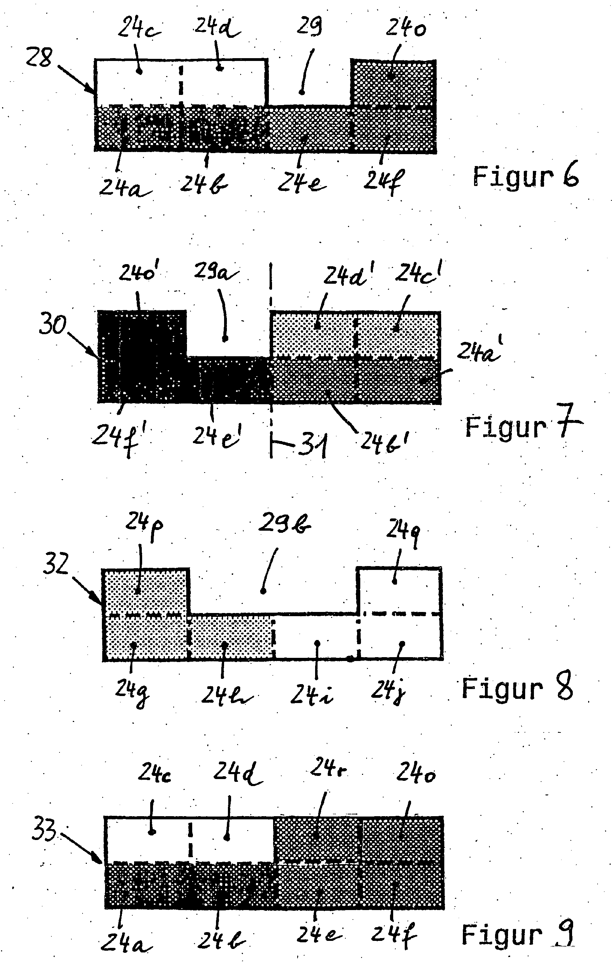

In Fig. 4 und 5 ist berücksichtigt, dass ein Übergangsbereich 26 zwischen den gekoppelten Sektionen 1 und 1a eines Magnetschwebefahrzeugs wie Übergänge zu den bereits beschriebenen, führmagnetfreien Zonen unerwünschte Lastwechsel zur Folge haben. Daher sieht das Ausführungsbeispiel nach Fig. 4 und 5 vor, den letzten Führmagneten FM6 am hinteren Ende der Bugsektion 1 und den ersten Führmagneten FM7 am Anfang der Mittelsektion 1a jeweils nicht wie den Führmagneten FM4 bzw. FM1, sondern wie den Führmagneten FM2 auszubilden. Außerdem wird in dem Über- gangsbereich 26 zwischen den Führmagneten FM6 und FM7 ein weiterer Führmagnet FM10 angeordnet, der ebenfalls wie der Führmagnet FM2 ausgebildet ist und vier Wicklungen 24k, 241, 24m und 24n aufweist, die zweckmäßig in derselben Ebene wie die Wicklungen der Führmagnete FM6 und FM7 liegen. Die Zuordnungen von Regel- kreisen IX bis XIV ergeben sich aus Fig. 6, wonach je zwei in Fahrtrichtung v hintereinander liegende Wicklungen (z. B. 24k, 241 oder 24m, 24n) in Reihenschaltung mit einem zugeordneten Regelkreis (z. B. XI und XII) verbunden sind.

Eine entsprechende Anordnung kann in allen Übergangsbereichen zwischen den im Einzelfall vorhandenen Bug-, Heck- und Mittelabschnitten vorgesehen sein.

Ein Vorteil der aus Fig. 4 und 5 ersichtlichen Ausbildung der Führmagnete FM6, FM7 und FM10 besteht darin, dass durch sie ein Band von Wicklungen bzw. Magnetpolen, d. h. ein durchlaufendes magnetisches Flussband erhalten wird, das zwischen zwei führmagnetfreien Zonen, z. B. in Form von Bremseinrichtungen 4 und 4a in Fig. 4, ununterbrochen durchläuft. In diesem Band liegen die Wicklungen einzeln hintereinander mit der Folge, dass ein ständiger Abriss und Neuaufbau des magnetischen Flusses vermieden wird und sich zu beachtende Lastwechsel und Momente nur noch dort ergeben können, wo führmagnetfreie Zonen unumgänglich sind, wie dies für den Anfang oder das Ende eines Magnetschwebefahrzeugs oder die Bremseinrichtungen 4, 4a gilt. Dabei ist klar, dass die in Fig. 1 bis 5 für die Bugsektion 1 und eine Mittelsektion 1a beschriebene Anordnung auch im Heckbereich vorgesehen sein kann, insbesondere wenn das Magnetschwebefahrzeug symmetrisch zur Fahrzeugmitte und zur Fortbewegung in zwei entgegengesetzte Richtungen ausgebildet ist, d. h. identisch aufgebaute, aber spiegelsymmetrisch zu einer Mittelebene angeordnete Bug- und Hecksektionen aufweist.

Führmagnetsysteme dieser Art sind insbesondere aus dem Dokument DE 10 2004 056 438 A1 bekannt, das hiermit zur Vermeidung von Wiederholungen durch Referenz zum Gegenstand der vorliegenden Offenbarung gemacht wird.

Die beschriebenen Führmagnetsysteme haben sich als nicht vollkommen ideal erwiesen. Insbesondere hat sich gezeigt, dass an den einzelnen, durch die Abstützteile 14, 10a, 14a usw. gebildeten Gelenkpunkten des Schwebegestells unterschiedliche Lasten auftreten. Beispielsweise muss der in Fahrtrichtung v erste Führmagnet FM1 nicht nur die Bugsektion 1 stärker in die längs des Fahrwegs vorgesehenen Kurven ziehen, sondern in der Regel auch stärkere Windlasten und/oder Hangabtriebskräfte kompensieren, als dies für Führmagnetsysteme in mittleren Bereichen der Bugsektion 1 und an diese angekoppelte Mittel- und Hecksektionen gilt. Erfindungsgemäß wird daher vorgeschlagen, die Führmagnete in einem in Fahrtrichtung v vorn liegenden Bereich der Bugsektion 1 mit einer größeren Anzahl von Wicklungen als in einem in Fahrtrichtung hinten liegenden Bereich zu versehen. Zu diesem Zweck werden gemäß Fig. 6 bis 8 drei weitere Ausführungsformen für die Magnetanordnungen der Führmagnete vorgesehen. Eine vierte Ausführungsform nach Fig. 9 kann alternativ für die Varianten nach Fig. 6 und 7 angewendet werden.

In Fig. 6 bis 9 sind diejenigen Wicklungen, die bereits bei den Magnetanordnungen nach Fig. 1 vorhanden sind, mit denselben Bezugszeichen versehen. Ein Unterschied zu Fig. 1 besteht zwar darin, dass z. B. in Fig. 6 die Wicklungen 24a, 24b, 24e und 24f in der unteren statt in der oberen Wicklungsebene und umgekehrt die Wicklungen 24c, 24d in der oberen anstatt in der unteren Wicklungsebene dargestellt sind. Das bedeutet aber keinen prinzipiellen Unterschied, weil die gewünschte Funktion der Führmagnete unabhängig davon erzielt werden kann, ob die genannten Wicklungen in der oberen oder unteren Wicklungsebene angeordnet sind.

Fig. 6 zeigt schematisch eine Magnetanordnung 28 für einen Führmagneten, die wie in Fig. 1 in einer ersten Wicklungsebene die vier Wicklungen 24a, 24b, 24e und 24f und in einer zweiten Wicklungsebene die beiden Wicklungen 24c und 24d aufweist, während an dem mit der Wicklung 24f versehenen Ende der Magnetanordnung 28 eine zusätzliche Wicklung 24o in der zweiten Wicklungsebene untergebracht ist. Zwischen dieser Wicklung 24o und der in derselben Wicklungsebene befindlichen Wicklung 24d bleibt eine Lücke 29 von der Größe einer Wicklung, so dass dieser Führmagnet insgesamt eine ungerade Anzahl von hier sieben Magnetpolschenkel bzw. Wicklungen hat. Dabei deuten die unterschiedlichen Schraffuren in Fig. 6 an, dass einerseits vordere (linke) Wicklungspaare aus nebeneinander liegenden Wicklungen 24a, 24b und 24c, 24d in Reihenschaltung mit je einem ersten bzw. zweiten zugeordneten Regelkreise verbunden sind, während andererseits im hinteren (rechten) Bereich die drei Wicklungen 24e, 24f und 24o in Reihenschaltung an einen dritten Regelkreis (z. B. den Regelkreis III in Fig. 3) angeschlossen sind. Alternativ ist es aber auch möglich, die Wicklungspaare aus den diagonal übereinander liegenden Wicklungen 24a, 24d und 24b, 24c analog zu Fig. 1 und 3 jeweils dem Regelkreis I bzw. II (Fig. 3) zuzuordnen.

In Fig. 7 ist eine weitere Magnetanordnung 30 für einen Führmagneten dargestellt. Diese Magnetanordnung 30 enthält in einer ersten Wicklungsebene vier hintereinander angeordnete Wicklungen 24a', 24b', 24e', 24f' und in einer zweiten Wicklungsebene einerseits im hinteren (rechten) Teil zwei Wicklungen 24c' und 24d', andererseits am vorderen Ende eine zusätzliche Wicklung 24o'. Deshalb entspricht diese Magnetanordnung 30 genau der Magnetanordnung 28, außer dass sie um eine in Fig. 7 angedeutete Achse 31 um 180° gedreht ist. Eine Lücke 29a kommt daher im Vergleich zu Fig. 6 an einer um eine Wicklung versetzten Stelle zu liegen. Außerdem können wie im Fall der Fig. 6 z. B. die Wicklungen 24a', 24b', und 24c', 24d' je einem Regelkreis zugeordnet und die drei Wicklungen 24e', 24f' und 24o' an einen dritten Regelkreis angeschlossen werden. Im übrigen zeigt Fig. 7, dass die Magnetanordnung 30 wie die Magnetanordnung 28 (Fig. 6) sieben Wicklungen aufweist und bis auf die Wicklung 24o' derjenigen des Führmagneten FM3 in Fig. 1 entspricht.

Fig. 8 zeigt eine weitere Magnetanordnung 32, die in einer ersten Wicklungsebene wie beim Führmagneten FM2 in Fig. 1 die vier hintereinander liegenden Wicklungen 24g bis 24j aufweist, jedoch an beiden Enden zusätzlich je eine weitere, in einer zweiten Wicklungsebene angeordnete Wicklung 24p und 24q enthält. Dabei sind jeweils drei unmittelbar übereinander und nebeneinander liegende Wicklungen (z. B. 24g, 24h und 24p bzw. 24i, 24j und 24q) in Reihenschaltung mit je einem Regelkreis verbunden, wie die beiden unterschiedlichen Schraffuren in Fig. 8 anzeigen sollen. Die Magnetanordnung 32 hat somit sechs, auf zwei Wicklungsebenen verteilte Wicklungen, wobei die beiden Wicklunge 24p und 24q durch eine Lücke 29b getrennt sind, die der Länge von zwei Wicklungen entspricht.

Durch die zusätzlichen Magnetanordnungen 28, 30 und 32 werden in Verbindung mit den drei Magnetanordnungen, die in Fig. 1 die Führmagnete FM1, FM2 und FM3 bilden, insgesamt sechs unterschiedliche Magnetanordnungen erhalten, die einen Baukasten bilden, aus dem nicht nur alle längs eines Magnetschwebefahrzeugs auszubildenden Führmagnete gebildet, sondern auch die unterschiedlichen Belastungen berücksichtigt werden können, die sich an unterschiedlichen Orten eines Magnetschwebefahrzeugs ergeben können.

Eine weitere, für denselben Zweck verwendbare Magnetanordnung 33 ist in Fig. 9 gezeigt. Sie enthält in zwei Wicklungsebenen je vier Wicklungen, die entsprechend den unterschiedlichen Schraffuren in Fig. 9 drei verschiedenen Regelkreisen zugeordnet werden. Die Magnetanordnung 33 entsteht z. B. aus der Magnetanordnung 28 nach Fig. 6 dadurch, dass deren Lücke 29 mit einer weiteren Wicklung 24r ausgefüllt wird, so dass hier alle acht möglichen Wicklungen vorhanden sind.

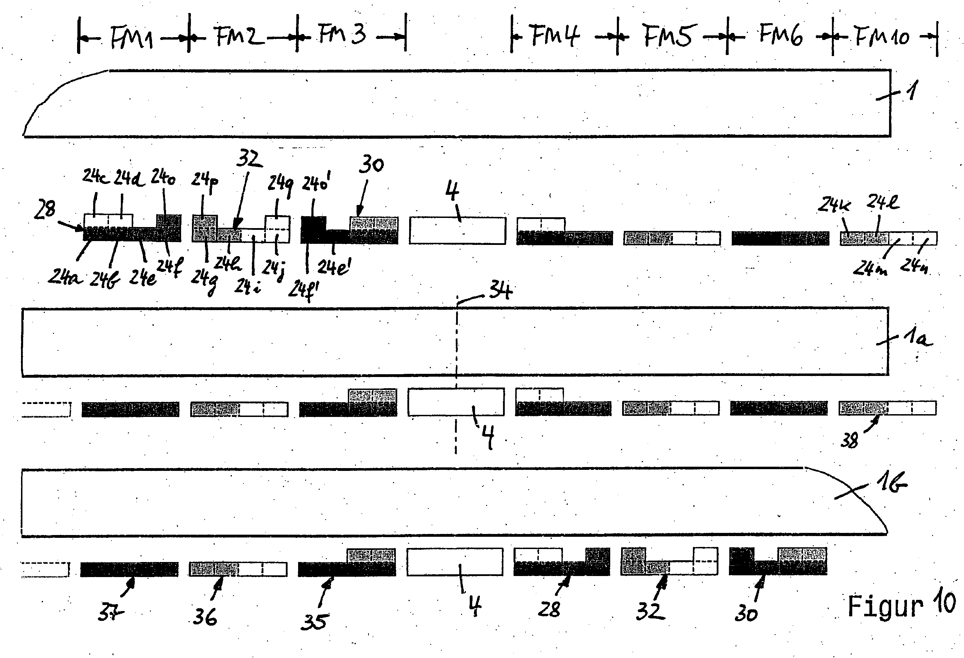

Eine mögliche Ausrüstung eines Magnetschwebefahrzeugs unter Anwendung der Wicklungen, die anhand der Fig. 1 und 6 bis 8 beschrieben wurden, zeigt Fig. 10 an einem derzeit für am besten gehaltenen Ausführungsbeispiel. In Fig. 10 sind drei Sektionen, nämlich die Bugsektion 1, die Mittelsektion 1a und eine spiegelsymmetrisch zur Bugsektion 1 ausgebildete Hecksektion 1b nur mit ihren äußeren Umfangskonturen angedeutet und aus Platzgründen untereinander dargestellt, obwohl sie natürlich tatsächlich entsprechend Fig. 4 in Fahrtrichtung v hintereinander gekoppelt sind. Außerdem sind die in den einzelnen Sektionen 1, 1a und 1b untergebrachten Führmagnete jeweils unterhalb der zugehörigen Umfangskontur in derselben Weise wie in Fig. 1, 4 und 6 bis 8 schematisch dargestellt.

Jede Sektion 1, 1a und 1b enthält analog zu Fig. 1 in einem mittleren Bereich eine Bremseinrichtung 4 und in Fahrtrichtung v davor bzw. dahinter je drei Führmagnete. In einem vordersten Bereich der Bugsektion 1 ist der Führmagnet FM1 durch eine Magnetanordnung 28 nach Fig. 5 gebildet. Daran schließt sich der Führmagnet FM2 mit einer Magnetanordnung 32 nach Fig. 8 an, und zwischen der Magnetanordnung 32 und der Bremseinrichtung 4 ist eine Magnetanordnung 30 gemäß Fig. 7 des Führmagneten FM3 angeordnet. Die drei Magnetanordnungen 28, 30 und 32 ersetzen erfindungsgemäß die drei in Fig. 1 dargestellten Magnetanordnungen der Führmagnete FM1 bis FM3.

In dem in Fahrtrichtung v hinter der Bremseinrichtung 4 befindlichen Bereich sind die drei Führmagnete FM4, FM5 und FM6 der Bugsektion 1 genauso wie in Fig. 4 aus- gebildet, wobei im Übergangsbereich zwischen der Bugsektion 1 und der Mittelsektion 1a zusätzlich auch die Wicklungen 24k bis 24n des Führmagneten FM10 vorhanden sind. Im übrigen zeigt Fig. 10, dass in der Mittelsektion 1a bis auf die an die Bremseinrichtung 4 angrenzenden Stellen nur Magnetanordnungen vorhanden sind, die den Führmagneten FM5 bis FM8 in Fig. 4 entsprechen, während in den an die Bremseinrichtungen 4 grenzenden Bereichen Führmagnete vorgesehen sind, die den Führmagneten FM9 bzw. FM4 in Fig. 4 entsprechen.

Schließlich ist aus Fig. 10 ersichtlich, dass die Hecksektion 1b spiegelsymmetrisch zu einer senkrecht zur Fahrtrichtung v stehenden Mittelebene 34 des Magnetschwebefahrzeugs ausgebildet ist. Daher hat die Hecksektion 1b an dem in Fig. 10 hinteren, rechten Ende eine Magnetanordnung 30 nach Fig. 7, in einem von rechts an die Bremseinrichtung 4 grenzenden Bereich eine Magnetanordnung 28 nach Fig. 6 und zwischen diesen beiden eine Magnetanordnung 32 nach Fig. 8. Der in Fahrtrichtung hintere Bereich der Hecksektion 1b ist daher zwar spiegelsymmetrisch, im übrigen aber genauso wie der vordere Bereich der Bugsektion 1 ausgebildet. Entsprechendes gilt für den vorderen Bereich der Hecksektion 1b, der spiegelsymmetrisch zum hinteren Bereich der Bugsektion 1 ausgebildet ist, da hier Magnetanordnungen 35, 36 und 37 vorgesehen sind, die den Magnetanordnungen der Führmagnete FM4 bis FM6 entsprechen, wobei die Magnetanordnung 35 spiegelsymmetrisch zu der des Führmagneten FM4 ausgebildet ist. Außerdem ist zwischen den beiden Sektionen 1a und 1b eine Magnetanordnung 38 vorhanden, die der zwischen den beiden Sektionen 1 und 1a vorhandenen Magnetanordnung des Führmagneten FM10 entspricht.

Die anhand der Fig. 10 beschriebene Ausbildung der Führmagnete in den verschiedenen Sektionen bringt den Vorteil mit sich, dass die Sektionen dort, wo beim Betrieb die größten Lasten auftreten, mit den stärksten Magnetanordnungen versehen sind und daher entsprechend hohen Führkräften unterworfen werden können. Insbesondere stehen sich in der Bug- und Hecksektion 1, 1b in dem Bereich, wo die Magnetanordnungen 28, 32 einander zugewandt sind bzw. aneinander grenzen, jeweils zwei Wicklungspaare bzw. Magnetpolpaare (z. B. 24f, 24o und 24g, 24p) statt bisher nur zwei einzelne Wicklungen bzw. Magnetpolschenkel (z. B. 24f und 24g) gegenüber, wie ein Vergleich der Fig. 1 und 10 zeigt. Dadurch können einerseits mit Hilfe der im Vergleich zu Fig. 1 zusätzlichen Wicklungen 240, 24p, 24q und 24o' erheblich größere Lasten als in den übrigen Bereichen kompensiert werden, was gerade in den Gelenkpunkten des Schwebegestells wichtig ist. Andererseits ist die Anordnung dennoch so getroffen, dass beim Ausfall z. B. der Wicklungen 24e, 24f, 24o oder 24e', 24f, 24o' oder der zugehörigen Regelkreise die ihnen gegenüber stehenden Wicklungen 24g, 24h, 24p bzw. 24i, 24j, 24q bei entsprechender Stromerhöhung diesen Ausfall kompensieren können. Im hinteren Bereich der Bugsektion 1 und in den folgenden Sektionen 1a, 1b ist eine solche Verstärkung der Magnetkraft in der Regel nicht erforderlich, weshalb dort die bisherige Anordnung (Fig. 1 und Fig. 4) erhalten bleibt. Dagegen wird die Hecksektion 1b zweckmäßig dann spiegelsymmetrisch zur Bugsektion 1 ausgebildet, wenn sie bei umgekehrter Fahrtrichtung eine Bugsektion bilden soll. Ist dies nicht erforderlich, könnte die Hecksektion 1b auch wie bisher spiegelsymmetrisch zur Bugsektion nach Fig. 1 ausgebildet werden.

Im übrigen zeigt ein Vergleich der Fig. 1 und 10, dass der vordere Teil der Bugsektion 1 nach Fig. 10 insgesamt zwanzig Wicklungen gegenüber sechzehn Wicklungen in Fig. 1 aufweist, was einer Erhöhung der Magnetkraft um 25 % entspricht.

Bei Magnetschwebefahrzeugen, die extremen Belastungen im Bug- oder Heckbereich ausgesetzt sind, können die in Fig. 10 vorgesehenen Magnetanordnungen 28 und/oder 30 (Fig. 6 und 7) auch durch die Magnetanordnung 33 (Fig. 9) ersetzt werden. Dadurch würde eine weitere Wicklung 24r zur Erzeugung einer erhöhten Führkraft zur Verfügung stehen.

Die Erfindung bringt außer dem Vorteil der Möglichkeit, Führkräfte längs des Magnetschwebefahrzeug orts- und lastabhängig zu erzeugen, auch den weiteren Vorteil mit sich, dass gegenüber der herkömmlichen Anordnung nach Fig. 1 und 4 kein zusätzlicher Raum für Magnetpole bzw. Magnetpolschenkel geschaffen werden muss und keine zusätzlichen Regelkreise benötigt werden. Außerdem kann - über die ganze Länge des Magnetschwebefahrzeugs betrachtet - die jeweils kleinste Anzahl von Magnetpolen (Kerne und Wicklungen) vorgesehen werden, die in Abhängigkeit von der jeweils auftretenden Belastung möglich ist, was auch das Gesamtgewicht des Magnetschwebefahrzeugs günstig beeinflusst. Bei allem ist es wie in Fig. 1 und 4 möglich, zwischen den führmagnetfreien Zonen ein durchgehendes Magnetflussband auszubilden und damit die Zahl der Lastwechsel längs des Magnetschwebefahrzeugs klein zu halten.

Die Erfindung ist nicht auf die beschriebenen Ausführungsbeispiele beschränkt, die auf vielfache Weise abgewandelt werden können. Das gilt insbesondere für die beschriebene Form der Kerne und Wicklungen der Magnetanordnungen und für die übrige Ausbildung der Führmagnete. Weiter können zusätzlich zu den beschriebenen Magnetanordnungen weitere und/oder anders ausgebildete Magnetanordnungen vorgesehen sein, sofern sie die beschriebenen Funktionen des Führmagnetsystems nicht wesentlich beeinträchtigen. Hierfür ist es prinzipiell ausreichend, wenn jede Magnetanordnung nur mit den beschriebenen Wicklungen versehen ist. Die in Fahrzeug-Längsrichtung gemessene Länge der Magnetanordnungen und die Ausbildung der Magnetpole sind dabei entsprechend einer vorgegebenen Rasterlänge zweckmäßig überall gleich. Weiterhin ist die Erfindung nicht auf die beschriebenen Anzahlen der Führmagnete beschränkt, d. h. vor und hinter den Bremseinrichtungen 4, 4a können auch nur zwei oder mehr als zwei Führmagnete vorgesehen werden. Außerdem können pro Sektion mehr als zwei Bremseinrichtungen 4 vorhanden sein, zwischen denen dann entsprechende weitere Führmagnete angeordnet sind. Auch die Zahl der Regelkreise kann anders gewählt werden, wobei insbesondere auch jeder einzelnen Wicklung ein eigener Regelkreis zugeordnet werden könnte. Das würde zwar die Kosten erhöhen, das Herstellen der Redundanz jedoch vereinfachen. Weiter ist klar, dass die Führmagnete zusätzlich in bekannter Weise mit Spaltsensoren ausgerüstet werden können, die z. B. in Fig. 1 und 4 in den Lücken zwischen den verschiedenen Wicklungen angeordnet werden. Außerdem versteht sich, dass die verschiedenen Merkmale auch in anderen als den beschriebenen und dargestellten Kombinationen angewendet werden können.

## Patentansprüche

1. Magnetschwebefahrzeug mit einer Bugsektion (1) und einer weiteren, an die Bugsektion (1) anschließenden Sektion, wobei die Bugsektion (1) eine Mehrzahl von in einer Fahrtrichtung (v) hintereinander angeordneten Führmagneten (FM1 bis FM6) und eine Mehrzahl von den Führmagneten (FM1 bis FM6) zugeordneten Regelkreisen (17) enthält, wobei die Führmagnete (FM1 bis FM6) zumindest teilweise mit zwei oder mehr Wicklungsebenen aufweisenden Kernen (15) und mit mehreren, in den Wicklungsebenen angeordneten, in Fahrtrichtung (v) hintereinander liegenden, Magnetpole bildenden Wicklungen (24) versehen sind, wobei wenigstens je zwei unmittelbar neben- oder übereinander liegende Wicklungen (z. B. 24a, 24b; 24c, 24d) elektrisch in Reihe mit einem ihnen zugeordneten der Regelkreise (17) verbunden sind, wobei die Bugsektion (1) in einem mittleren Bereich mit einer von Führmagneten freien Zone versehen ist, die einen in Fahrtrichtung (v) vorderen Bereich und einen hinteren Bereich der Bugsektion (1) trennt und wobei ein weiterer Führmagnet (FM10) in dem Übergangsbereich zwischen der Bugsektion (1) und der weiteren, anschließenden Sektion angeordnet ist, **dadurch gekennzeichnet, dass** die Führmagnete (FM1 bis FM3) in dem in Fahrtrichtung (v) vorderen Bereich der Bugsektion (1) zumindest teilweise mit einer größeren Anzahl von Wicklungen (24) versehen sind als die Führmagnete (FM4 bis FM6) in dem hinteren Bereich der Bugsektion (1), so dass im vorderen Bereich zumindest ein Führmagnet mehr Wicklungen als jeder Führmagnet im hinteren Bereich aufweist und dass die gesamte Anzahl der Wicklungen der Führmagnete (FM1 bis FM3) im vorderen Bereich größer ist als die Anzahl der Wicklungen der Führmagnete (FM4 bis FM6) im hinteren Bereich einschließlich der Hälfte der Wicklungen des weiteren Führmagneten (FM10) im Übergangsbereich.

2. Magnetschwebefahrzeug, insbesondere nach Anspruch 1, **dadurch gekennzeichnet, dass** es eine Hecksektion (1 b) und einer weiteren, an die Hecksektion (1b) anschließenden Sektion enthält, wobei die Hecksektion (1b) eine Mehrzahl von in Fahrtrichtung (v) hintereinander angeordneten Führmagneten und eine Mehrzahl von den Führmagneten zugeordneten Regelkreisen (17) enthält, wobei die Führmagnete zumindest teilweise mit zwei oder mehr Wicklungsebenen aufweisenden Kernen (15) und mehreren, in den Wicklungsebenen angeordneten, in Fahrtrichtung (v) hintereinander liegenden, Magnetpole bildenden Wicklungen (24) versehen sind, wobei wenigstens je zwei unmittelbar neben- oder übereinander liegende Wicklungen (24) elektrisch in Reihe mit einem ihnen zugeordneten der Regelkreise (17) verbunden sind, wobei die Hecksektion (1b) in einem mittleren Bereich mit einer von Führmagneten freien Zone versehen ist, die einen in Fahrtrichtung (v) hinteren Bereich und einen vorderen Bereich der Hecksektion (1) trennt, wobei ein weiterer Führmagnet in dem Übergangsbereich zwischen der Hecksektion (1) und der weiteren, anschließenden Sektion angeordnet ist, wobei die Führmagnete in dem in Fahrtrichtung (v) hinteren Bereich zumindest teilweise mit einer größeren Anzahl von Wicklungen (24) versehen sind als die Führmagnete in einem in Fahrtrichtung (v) vorderen Bereich, so dass in dem hinteren Bereich zumindest ein Führmagnet mehr Wicklungen als jeder Führmagnet im vorderen Bereich aufweist und wobei die gesamte Anzahl der Wicklungen der Führmagnete im hinteren Bereich größer ist als die Anzahl der Wicklungen der Führmagnete (FM4 bis FM6) im vorderen Bereich einschließlich der Hälfte der Wicklungen des weiteren Führmagneten (FM10) im Übergangsbereich.

3. Magnetschwebefahrzeug nach Anspruch 2, **dadurch gekennzeichnet, dass** die Führmagnete der Hecksektion (1b) spiegelsymmetrisch zu den Führmagneten (FM1 bis FM6) der Bugsektion (1) ausgebildet und angeordnet sind.

4. Magnetschwebefahrzeug nach einem der Ansprüche 1 bis 3, **dadurch gekennzeichnet, dass** in der führmagnetfreien Zone eine Bremseinrichtung (4, 4a) angeordnet ist.

5. Magnetschwebefahrzeug nach einem der Ansprüche 1 bis 4, **dadurch gekennzeichnet, dass** die Bug- und/oder Hecksektion (1, 1 b) in Fahrtrichtung (v) vor bzw. hinter der führmagnetfreien Zone je drei gleich lang ausgebildete Führmagnete (FM1 bis FM3 bzw. FM4 bis FM6) aufweist.

6. Magnetschwebefahrzeug nach Anspruch 5, **dadurch gekennzeichnet, dass** zwei dem Vorderende der Bugsektion (1) bzw. dem Hinterende der Hecksektion (1b) und der führmagnetfreien Zone zugewandte Führmagnete (z. B. FM1 und FM3) je sieben Wicklungen (24) und der dazwischen liegende Führmagnet (z. B. FM2) sechs Wicklungen (24) aufweist.

7. Magnetschwebefahrzeug nach Anspruch 6, **dadurch gekennzeichnet, dass** ein dem Vorderende der Bugsektion (1) bzw. dem Hinterende der Hecksektion (1 b) zugewandter Führmagnet (z. B. FM1) eine größere Anzahl von Wicklungen (24) als die beiden anderen Führmagnete (z. B. FM2, FM3) aufweist.

8. Magnetschwebefahrzeug nach Anspruch 7, **dadurch gekennzeichnet, dass** der dem Vorderende der Bugsektion (1) bzw. dem Hinterende der Hecksektion (1b) zugewandter Führmagnet (z. B. FM1) acht Wicklungen (24), die beiden anderen Führmagnete (z. B. FM2, FM3) dagegen sechs bzw. sieben Wicklungen (24) aufweisen.

9. Magnetschwebefahrzeug nach einem der Ansprüche 1 bis 8, **dadurch gekennzeichnet, dass** dem Vorderende der Bugsektion (1) bzw. dem Hinterende der Hecksektion (1b) und/oder der führmagnetfreien Zone zugewandte Führmagnete (z. B. FM1) an ihrem Vorder- bzw. Hinterende bzw. an ihrem der führmagnetfreien Zone zugewandten Ende wenigstens vier, in zwei Wicklungsebenen angeordnete Wicklungen (24) aufweisen, wobei jeweils zwei in Fahrtrichtung (v) hintereinander oder hintereinander und diagonal übereinander liegende Wicklungen (z. B. 24a, 24d; 24b, 24c) elektrisch in Reihe geschaltet und mit einem ihnen zugeordneten Regelkreis (17) verbunden sind.

## Claims

1. A maglev vehicle with a nose section (1) and an additional section adjacent to the nose section (1), wherein the nose section (1) contains a plurality of guidance magnets (FM1 to FM6) arranged behind one another in a traveling direction (v) and a plurality of control circuits (17) assigned to the guidance magnets (FM1 to FM6), wherein at least some of the guidance magnets (FM1 to FM6) are provided with cores (15) that have two or more winding planes and with several windings (24) that are arranged in the winding planes, as well as behind one another in the traveling direction (v), and form magnetic poles, wherein at least two respective windings (e.g. 24a, 24b; 24c, 24d) that lie directly adjacent to one another or on top of one another are electrically connected in series to one of the control circuits (17) assigned thereto, wherein the nose section (1) is in a central region provided with a zone that is free of guidance magnets and separates a front region and a rear region of the nose section (1) referred to the traveling direction (v), and wherein an additional guidance magnet (FM10) is arranged in a transition region between the nose section (1) and the additional adjacent section, **characterized in that** at least some of the guidance magnets (FM1 to FM3) in the front region of the nose section (1) referred to the traveling direction (v) are provided with a greater number of windings (24) than the guidance magnets (FM4 to FM6) in the rear region of the nose section (1) such that at least one guidance magnet in the front region features more windings than any guidance magnet in the rear region, and **in that** the overall number of windings of the guidance magnets (FM1 to FM3) the front region is greater than the number of windings of the guidance magnets (FM4 to FM6) in the rear region including half the windings of the additional guidance magnet (FM10) in the transition region.

2. A maglev vehicle, particularly according to claim 1, **characterized in that** it features a tail section (1 b) and an additional section adjacent to the tail section (1 b), wherein the tail section (1 b) contains a plurality of guidance magnets arranged behind one another in a traveling direction (v) and a plurality of control circuits (17) assigned to the guidance magnets, wherein at least some of the guidance magnets are provided with cores (15) that have two or more winding planes and with several windings (24) that are arranged in the winding planes, as well as behind one another in the traveling direction (v), and form magnetic poles, wherein at least two respective windings (24) that lie directly adjacent to one another or on top of one another are electrically connected in series to one of the control circuits (17) assigned thereto, wherein the tail section (1 b) is in a central region provided with a zone that is free of guidance magnets and separates a front region and a rear region of the tail section (1) referred to the traveling direction (v), wherein an additional guidance magnet is arranged in a transition region between the tail section (1) and the additional adjacent section, wherein at least some of the guidance magnets in the rear region referred to the traveling direction (v) are provided with a greater number of windings (24) than the guidance magnets in the front region referred to the traveling direction (v) such that at least one guidance magnet in the rear region features more windings than any guidance magnet in the front region, and wherein the overall number of windings of the guidance magnets the rear region is greater than the number of windings of the guidance magnets (FM4 to FM6) in the front region including half the windings of the additional guidance magnet (FM10) in the transition region.

3. The maglev vehicle according to claim 2, **characterized in that** the guidance magnets of the tail section (1 b) are realized and arranged mirror-symmetrical to the guidance magnets (FM1 to FM6) of the nose section (1).

4. The maglev vehicle according to one of claims 1 to 3, **characterized in that** a braking device (4, 4a) is arranged in the zone free of guidance magnets.

5. The maglev vehicle according to one of claims 1 to 4, **characterized in that** the nose section and/or the tail section (1, 1b) respectively features three guidance magnets (FM1 to FM3 or FM4 to FM6) of identical length in front or behind the zone free of guidance magnets referred to the traveling direction (v).

6. The maglev vehicle according to claim 5, **characterized in that** each of two guidance magnets (e.g. FM1 and FM3), which respectively face the front end of the nose section (1) or the rear end of the tail section (1 b) and the zone free of guidance magnets, feature seven windings (24) and the guidance magnet (e.g. FM2) arranged in between features six windings (24).

7. The maglev vehicle according to claim 6, **characterized in that** one guidance magnet (e.g. FM1), which respectively faces the front end of the nose section (1) or the rear end of the tail section (1 b), features a greater number of windings (24) than the two other guidance magnets (e.g. FM2, FM3).

8. The maglev vehicle according to claim 7, **characterized in that** the guidance magnet (e.g. FM1), which respectively faces the front end of the nose section (1) or the rear end of the tail section (1 b), features eight windings (24) whereas the two other guidance magnets (e.g. FM2, FM3) respectively feature six or seven windings (24).

9. The maglev vehicle according to one of claims 1 to 8, **characterized in that** guidance magnets (e.g. FM1), which respectively face the front end of the nose section (1) or the rear end of the tail section (1 b) and/or the zone free of guidance magnets, respectively feature at least four windings (24) that are arranged in two winding planes on their front or rear end or on the end that faces the zone free of guidance magnets, wherein two respective windings (e.g. 24a, 24d; 24b, 24c) that lie behind one another referred to the traveling direction (v) or behind one another and diagonally on top of one another are electrically connected in series to a control circuit (17) assigned thereto.

## Revendications

1. Véhicule à sustentation magnétique, avec une section avant (1) et une autre section se raccordant sur la section avant (1), la section avant (1) comprenant une pluralité d'aimants de guidage (FM1 à FM6) disposés les uns derrière les autres dans le sens de déplacement (v) et une pluralité de circuits de réglage (17) associés aux aimants de guidage (FM1 à FM6), les aimants de guidage (FM1 à FM6) étant munis au moins en partie de noyaux (15) comportant deux plans d'enroulement ou plus et avec plusieurs enroulements (24), situés les uns derrière les autres dans le sens de déplacement (v), placés dans les plans d'enroulement, formant des pôles magnétiques, au moins chaque fois deux enroulements (par ex. 24a, 24b ; 24c, 24d) situés directement l'un au-dessus ou l'un à côté de l'autre étant électriquement reliés en série avec l'un des circuits de réglage (17) qui leur est associé, la section avant (1) étant munie dans une région centrale avec une zone dépourvue d'aimants de guidage qui sépare une région antérieure et une région postérieure de la section avant (1) dans le sens de déplacement (v) et un aimant de guidage (FM10) supplémentaire étant placé dans la zone de passage entre la section avant (1) et l'autre section qui s'y raccorde, **caractérisé en ce que** les aimants de guidage (FM1 à FM3) dans la région antérieure de la section avant (1) dans le sens de déplacement (v) sont munis au moins en partie d'un plus grand nombre d'enroulements (24) que les aimants de guidage (FM4 à FM6) dans la région postérieure de la section avant (1), de sorte que dans la région antérieure, au moins un aimant de guidage comporte plus d'enroulements que chaque aimant de guidage dans la région postérieure et que le nombre total des enroulements des aimants de guidage (FM1 à FM3) dans la région antérieure soit supérieur au nombre d'enroulements des aimants de guidage (FM4 à FM6) dans la région postérieure, incluant la moitié des enroulements de l'aimant de guidage (FM10) supplémentaire dans la zone de passage.

2. Véhicule à sustentation magnétique, notamment selon la revendication 1, **caractérisé en ce qu'**il comprend une section arrière (1 b) et une autre section se raccordant sur la section arrière (1 b), la section arrière (1 b) comprenant une pluralité d'aimants de guidage disposés les uns derrière les autres dans le sens de déplacement (v) et une pluralité de circuits de réglage (17) associés aux aimants de guidage, les aimants de guidage étant munis au moins en partie de noyaux (15) comportant deux plans d'enroulement ou plus et avec plusieurs enroulements (24), situés les uns derrière les autres dans le sens de déplacement (v), placés dans les plans d'enroulement, formant des pôles magnétiques, au moins chaque fois deux enroulements (24) situés directement l'un au-dessus ou l'un à côté de l'autre étant électriquement reliés en série avec l'un des circuits de réglage (17) qui leur est associé, la section arrière (1 b) étant munie dans une région centrale avec une zone dépourvue d'aimants de guidage qui sépare une région antérieure et une région postérieure de la section arrière (1) dans le sens de déplacement (v), un aimant de guidage supplémentaire étant placé dans la zone de passage entre la section arrière et les aimants de guidage dans la région postérieure dans le sens de déplacement (v) étant munis au moins en partie d'un plus grand nombre d'enroulements (24) que les aimants de guidage dans une région antérieure dans le sens de déplacement (v), de sorte que dans la région postérieure, au moins un aimant de guidage comporte plus d'enroulements que chaque aimant de guidage dans la région antérieure et le nombre total des enroulements des aimants de guidage dans la région postérieure étant supérieur au nombre d'enroulements des aimants de guidage (FM4 à FM6) dans la région antérieure, incluant la moitié des enroulements de l'aimant de guidage (FM10) supplémentaire dans la zone de passage.

3. Véhicule à sustentation magnétique selon la revendication 2, **caractérisé en ce que** les aimants de guidage de la section arrière (1 b) sont conçus et placés en symétrie spéculaire par rapport aux aimants de guidage (FM1 à FM6) de la section avant (1).

4. Véhicule à sustentation magnétique selon l'une quelconque des revendications 1 à 3, **caractérisé en ce que** dans la zone exempte d'aimants de guidage est placé un système de freinage (4, 4a).

5. Véhicule à sustentation magnétique selon l'une quelconque des revendications 1 à 4, **caractérisé en ce que** la section avant et/ou la section arrière (1, 1 b) dans le sens de déplacement (v) comporte à l'avant ou à l'arrière de la zone exempte d'aimants de guidage chaque fois trois aimants de guidage (FM1 à FM3 ou FM4 à FM6) conçus avec une longueur identique.

6. Véhicule à sustentation électromagnétique selon la revendication 5, **caractérisé en ce que** deux aimants de guidage (par ex. FM1 et FM3) faisant face à l'extrémité antérieure de la section avant (1) ou à l'extrémité postérieure de la section arrière (1b) et à la zone exempte d'aimants magnétiques comportent chacun sept enroulements (24) et **en ce que** l'aimant de guidage (par ex. FM2) intercalé comporte six enroulements (24).

7. Véhicule à sustentation magnétique selon la revendication 6, **caractérisé en ce qu'**un aimant de guidage (par ex. FM1) faisant face à l'extrémité antérieure de la section avant (1) ou à l'extrémité postérieure de la section arrière (1b) comporte un nombre plus élevé d'enroulements (24) que les deux autres aimants de guidage (par ex. FM2, FM3).

8. Véhicule à sustentation magnétique selon la revendication 7, **caractérisé en ce que** l'aimant de guidage (par ex. FM1) faisant face à l'extrémité antérieure de la section avant (1) ou à l'extrémité postérieure de la section arrière comporte huit enroulements (24) alors que les autres aimants de guidage (par ex. FM2, FM3) comportent en revanche six ou sept enroulements (24).

9. Véhicule à sustentation magnétique selon l'une quelconque des revendications 1 à 8, **caractérisé en ce que** des aimants de guidage (par ex. FM1) faisant face à l'extrémité antérieure de la section avant (1) ou à l'extrémité postérieure de la section arrière (1 b) et/ou à la zone exempte d'aimants de guidage comportent sur leur extrémité antérieure ou sur leur extrémité postérieure ou sur leur extrémité faisant face à la zone exempte d'aimants de guidage au moins quatre enroulements (24) placés dans deux plans d'enroulement, chaque fois deux enroulements (par ex. 24a, 24d ; 24b, 24c) situés l'un derrière l'autre ou l'un derrière l'autre dans le sens de déplacement (v) et l'un au-dessus de l'autre en diagonale sont électriquement montés en série et reliés avec un circuit de réglage (17) qui leur est associé.
